Europäisches Patentamt

European Patent Office

Office européen des brevets

(19)

(11) EP 1 431 959 A2

(12) EUROPEAN PATENT APPLICATION

(43) Date of publication:
23.06.2004 Bulletin 2004/26

(51) Int Cl.$^7$: G10L 15/06, G10L 15/12, G10L 15/14

(21) Application number: 03257458.4

(22) Date of filing: 26.11.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 18.12.2002 US 323152

(71) Applicant: MATSUSHITA ELECTRIC INDUSTRIAL
CO., LTD.
Kadoma-shi, Osaka 571-8501 (JP)

(72) Inventors:
• Bonastre, Jean-Francois
84740 Velleron (FR)
• Morin, Philippe
Santa Barbara, California 93105 (US)
• Junqua, Jean-Claude
Santa Barbara, California 93110 (US)

(74) Representative: Atkinson, Ralph et al
Atkinson Burrington,
25-29 President Buildings,
President Way
Sheffield S4 7UR (GB)

(54) Gaussian model-based dynamic time warping system and method for speech processing

(57) The Gaussian Dynamic Time Warping model provides a hierarchical statistical model for representing an acoustic pattern. The first layer of the model represents the general acoustic space; the second layer represents each speaker space and the third layer represents the temporal structure information contained in each enrollment speech utterance, based on equally-spaced time intervals. These three layers are hierarchically developed: the second layer is derived from the first, and the third layer is derived from the second. The model is useful in speech processing application, particularly in applications such as word and speaker recognition, using a spotting recognition mode.

Fig-1

EP 1 431 959 A2

**Description**

FIELD OF THE INVENTION

The present invention relates generally to models for representing speech in speech processing applications. More particularly, the invention relates to a modeling technique that advantageously utilizes both text-independent statistical acoustic space modeling and temporal sequence modeling to yield a modeling system and method that supports automatic speech and speaker recognition applications, including a spotting mode, with considerably less enrollment data than conventional statistical modeling techniques.

BACKGROUND OF THE INVENTION

Speech modeling techniques are now widely used in a diverse range of applications from speech recognition to speaker verification/identification. Most systems today use the Hidden Markov Model (HMM) to attack the challenging problem of large vocabulary, continuous speech recognition. A Hidden Markov Model represents speech as a series of states, where each state corresponds to a different sound unit. Prior to use, a set of Hidden Markov Models is built from examples of human speech, the identity of which is known. At training time, a statistical analysis is performed to generate probability data stored in the Hidden Markov Models. These probability data are stored in predefined state-transition models (HMM models) that store the likelihood of traversing from one to state to the next and also the likelihood that a given sound unit is produced at each state. Typically, the likelihood data are stored as floating point numbers representing Gaussian parameters such as mean, variance and/or weight parameters.

Recognition systems based on Hidden Markov Models are very expensive in terms of training material requirements. They place significant memory requirements and processor speed requirements on the recognition system. In addition, traditional Hidden Markov Model recognition systems usually employ additional preprocessing, in the form of endpoint detection, to discriminate between actual input speech (i.e. part of signal that should be tested for recognition) and background noise (i.e. part of signal that should be ignored).

A different technique, called dynamic time warping (DTW), is often used where small quantity of enrollment data is available. The dynamic time warping process strives to find the "lowest cost" alignment between a previously trained template model and an input sequence. Typically, such model is built by acquiring input training speech, breaking that speech up into frames of equal size, and then representing each frame as a set of acoustic vectors through one of a variety of known processing techniques such as Cepstral processing or Fast Fourier Transform processing. In use, the input test speech is processed frame-by-frame, by extracting the acoustic vectors and computing a score for each temporal frame. Penalties are assigned for insertion and deletion errors and the sequence with the lowest cumulative score is chosen as the best match.

Dynamic time warping systems work well at tracking temporal sequences of a speech utterance. They require only a small amount of training data when compared to Hidden Markov Model recognizers and then intrinsically take into account Temporal Structure Information (TSI) of the voice.

However, dynamic time warping systems suffer a significant shortcoming. They do not perform well where there is a lot of variability in the target event (e.g., target word to be spotted). DTW systems are also difficult to adapt to new conditions. Thus, DTW systems can be used effectively for word and speaker recognition, including spotting applications, when conditions are relatively stable. They are not well suited when there is a large variability in the target events (word or speaker) or a large variability in the environment encountered.

A third type of modeling system, using what are called Gaussian Mixture Models (GMM), is often chosen where speaker verification/identification must be performed. The Gaussian Mixture Model is, essentially, a single state Hidden Markov Model. input training speech is acquired frame-by-frame, and represented as a set of acoustic vectors (by applying Cepstral processing or FFT processing, for example). The acoustic vectors from multiple instances of a speaker's training speech are gathered and combined to produce a single mixture model representing that speaker. Unfortunately, this modeling process discards all temporal information. Thus the information related to the temporal structure (TSI) that is naturally present from frame-to-frame is lost.

While each of the previously described modeling systems has its place in selected speech applications, there remains considerable room for improvement, particularly in applications that need improved performance for speaker identification/verification or improved performance for word spotting applications, without the large amount of training material associated with full-blown Hidden Markov Modeling systems. The present invention provides such an improvement through use of a unique new modeling system that models temporal sequence information well and also handles variability well, so that changes in the acoustic space are easily accommodated.

SUMMARY OF THE INVENTION

The present invention provides a new speech modeling technique, which we call Gaussian dynamic time warping (GDW). The GDW speech model provides an upper layer for representing an acoustic space; an intermediate layer for representing a speaker space; and a lower layer for representing temporal structure of enrollment speech, based on equally-spaced time intervals or frames. These three layers are hierarchically developed: the intermediate layer is linked to the upper, and the lower layer is linked to the intermediate.

In another aspect, the invention provides a method for constructing the GDW speech model in which the upper layer acoustic space model is constructed from a plurality of speakers. An intermediate layer speaker model is then constructed for each speaker (or a group of speakers) from the acoustic space model using enrollment speech related to this speaker (or a group of speakers). A lower level TSI (temporal structure information) model is then constructed for each target event by representing, sequentially, each time interval associated with the available enrollment speech corresponding to this event. A target event is composed by a word (or a short phrase) and could be the word itself (word recognition applications) or the couple (word, speaker identity) (password-based speaker recognition applications). The GDW speech model corresponding to a given target event is composed by three hierarchically linked elements: an acoustic space model, a speaker model and a TSI (temporal structure information) model.

In another aspect, the invention provides a general methodology for constructing a speech model in which an acoustic space model is constructed from a plurality of utterances obtained from a plurality of speakers. A speaker model is then constructed by adapting the acoustic space model using enrollment speech from a single speaker or a group of speakers. The Temporal Structure Information model is then constructed from the acoustic space model, the speaker model and the enrollment speech corresponding to the target event.

For a further understanding of the invention, its objects and advantages, please refer to the remaining specification and the accompanying drawings.

BRIEF DESCRIPTION OF THE DRAWINGS

The present invention will become more fully understood from the detailed description and the accompanying drawings, wherein:

Figure 1 is a block diagram illustrating the general configuration of the Gaussian dynamic time warping (GDW) model of the invention;

Figures 2 and 3 comprise a flowchart diagram illustrating how the GDW model may be constructed and trained;

Figure 4 is a more detailed hierarchical model view of the GDW model, useful in understanding how acoustic space, speaker space and temporal structural information is stored in the GDW model;

Figure 5 is a comparative model view, illustrating some of the differences between the GDW model of the invention and conventional models, such as the Gaussian Mixture Model (GMM) and the classic dynamic time warping (DTW) model;

Figure 6 is a time warping alignment diagram useful in understanding how DTW decoding is performed by the temporal sequence processing system of a preferred embodiment; and

Figure 7 illustrates a frame dependent weighted windowing system useful in a preferred embodiment to reduce computational memory requirements.

DETAILED DESCRIPTION OF THE PREFERRED EMBODIMENTS

The following description of the preferred embodiment(s) is merely exemplary in nature and is in no way intended to limit the invention, its application, or uses.

THE GAUSSIAN DYNAMIC TIME WARPING (GDW) MODEL

At the heart of the preferred system and method lies the hierarchically-developed model, called the Gaussian dynamic time warping (GDW) model. As will be more fully explained, this model is based on statistical acoustic space information, statistical speaker space information and statistical temporal structure information associated with the enrollment speech. Thus the GDW speech model captures information about the acoustic space associated with the environment where the speech system is deployed. The GDW model also captures information about the voice characteristics of the speakers who are providing the enrollment speech. Finally, the GDW model captures temporal structure information and information about the phonetic content of the enrollment speech itself. In the latter regard, enrollment speech such as "sports car" has a distinctly different TSI pattern from the utterance "Mississippi" and also from the utterance "carport."

One unique aspect of the GDW speech model is that this temporal sequence information is modeled by modifying, differently for each temporal segment, the Gaussian parameters that are also used to represent the acoustic space and speaker space information. Preferably, only few parameters are selected and modified for a given temporal segment. The presently preferred embodiment represents the acoustic space variability information with the (GDW model) upper layer's Gaussian covariance parameters; the speaker related information with the GDW model intermediate layer's Gaussian mean parameters; and the temporal sequence information with the GDW model lower layer's weights used to formulate Gaussian mixture models.

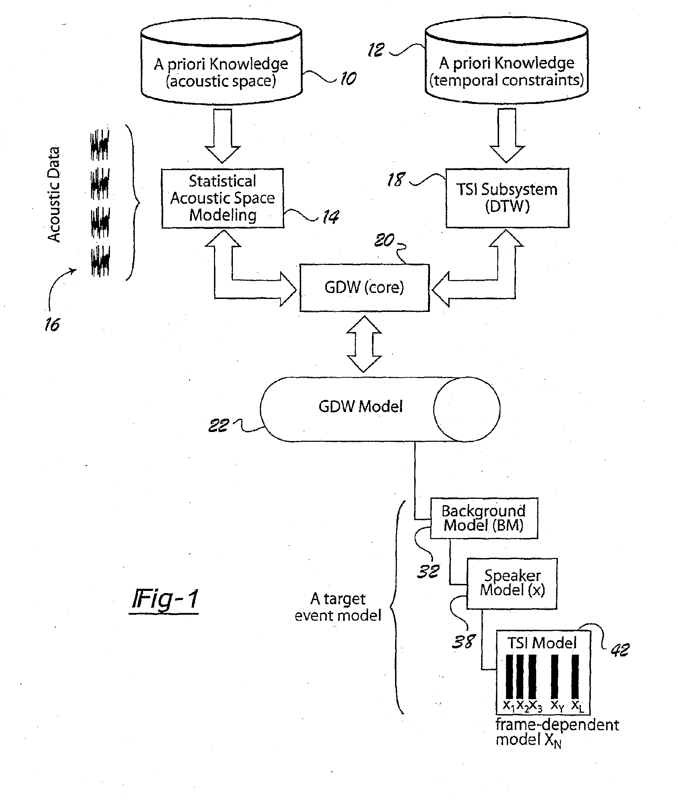

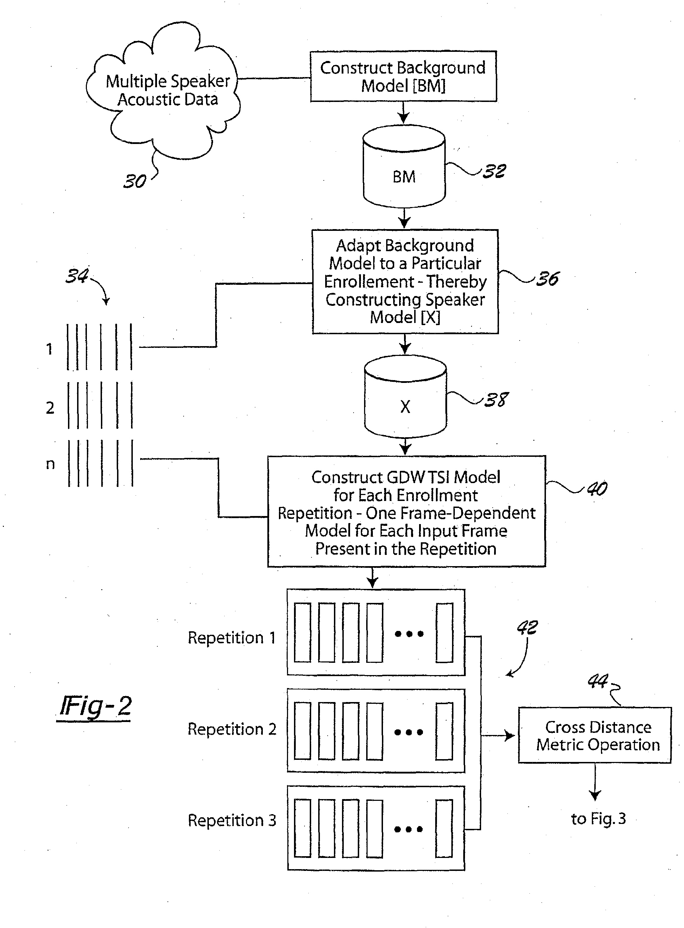

Figure 1 shows the general principle of the GDW approach. As illustrated, the GDW model captures a priori knowledge about the acoustic space 10 and a priori knowledge about the temporal structure information (temporal constraints) 12. The a priori knowledge of acoustic space 10 is fed to a statistical acoustic space modeling system 14, that also receives acoustic data 16 as an input. The acoustic data 16 represents or is derived from the enrollment speech supplied during training and during the test phase (i.e. during use).

The a priori knowledge of temporal constraints 12 is similarly fed to a temporal constraints processing system 18. The temporal constraints processing system employs a dynamic time warping (DTW) algorithm as will be more fully explained below. Generally speaking, the temporal constraints processing system defines the temporal sequence information (TSI) constraints that are used both during enrollment training and during tests (i.e., during use).

The respective outputs of systems 14 and 18 are supplied to the GDW core system 20 that is responsible for managing the exchange and correlation of information between the statistical acoustic space modeling system 14 and the temporal constraints processing system 18. The GDW core 20 ultimately constructs and manages the GDW model 22.

The GDW model is composed of three hierarchical layers. At the upper layer the model includes a generic acoustic space model, called the background model (BM) 32 that describes the global acoustic space and the global recording conditions. Hierarchically related to background model 32 is the set of speaker models comprising the intermediate level 38. Each model of this layer represents speaker-specific speech characteristics (for a given speaker or a group of speakers) and is symbolically referred to below by the symbol X.

The speaker model 38 is an acoustic model that describes the global acoustic space of the speaker (or the group of speakers). It is derived from the background model (hence the hierarchical relationship). The lower hierarchical elements of the GDW model are temporal structure information models, denoted TSI models. A TSI model 42 of this layer is composed by a set of frame-dependent models, with a sequential order. For each frame n of a target event, the corresponding frame-dependent model is denoted $X_n$ and is derived from its corresponding X model.

The hierarchical relationship of the above model layers, and the nature of the information stored in these hierarchical layers, renders the GDW model very rich, compact and robust. This, in turn, gives speech processing systems based on the GDW model the ability to perform word recognition and speaker recognition (both with a spotting mode) under potentially large target event variability and environment variability. As will be more fully illustrated in the following section, acoustic space information (typically developed from a plurality of speakers under varying noise conditions) is used when constructing the speaker X models. The X models capture information about an enrollment speaker (or a group of speakers), but that information is modeled in the X model as modifications of the acoustic space model, so that acoustic space information from the background model is also at least partially retained. Similarly, the X models are used to construct the corresponding temporal structure information (TSI) models. A TSI model is composed by a set of frame-dependent models, such that the frame-dependent models capture temporal information about the particular target event utterance, while retaining information from the speaker model X and the background model BM.

TRAINING OF THE GDW MODEL

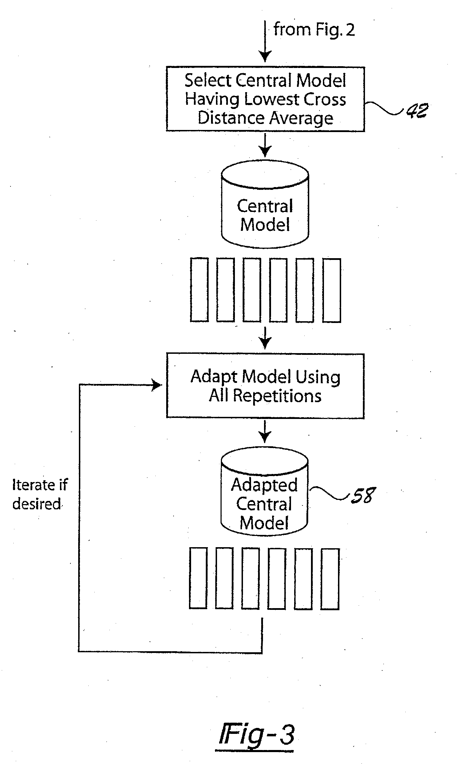

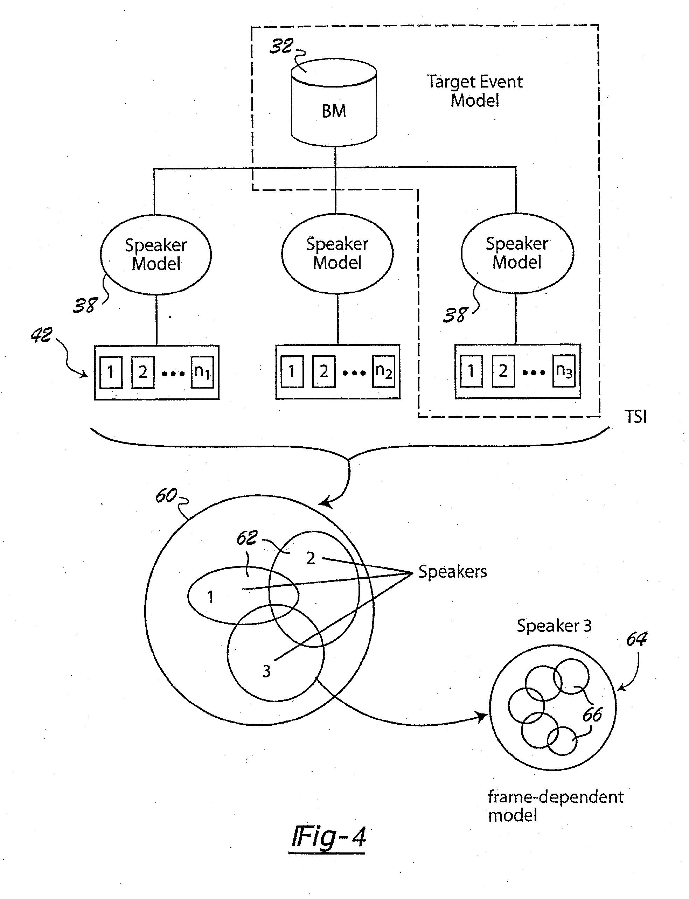

Figures 2 and 3 illustrate a presently preferred procedure for training the GDW model. Understanding how the model is trained will give further insight into the nature of the GDW model and its many advantages.

Referring to Figure 2, data from a plurality of speakers is gathered at 30 and used to construct a background model 32. The multiple speaker acoustic data 30 may be extracted from a variety of different utterances and under a variety of different background noise conditions. The background model 32 may be constructed using a variety of different statistical acoustic modeling techniques. In the presently preferred embodiment the acoustic data 30 is obtained and processed using Fast Fourier Transform (FFT) or Cepstral techniques to extract a set of acoustic vectors. The acoustic vectors are then statistically analyzed to develop an acoustic model that represents the acoustic space defined by the population of speakers in the environment used during acoustic data capture. In this respect, the term acoustic space refers to the abstract mathematical space spanned by the acoustic data, rather than the physical space in which the data was captured (although the ambient reverberation characteristics and background noise of the physical space do have an impact on the acoustic space).

In the presently preferred embodiment any suitable acoustic modeling representation of the acoustic data 30 may be used. For example, a Gaussian Mixture Model GMM or Hidden Markov Model HMM may be used. The choice between GMM and HMM is made depending on the amount of a priori acoustic knowledge available. If a large amount is available, an HMM model may be preferred; if a small amount of data is available a GMM model may be preferred. In either case, the models are trained in the conventional manner, preferably using an expectation-maximization algorithm. In training the models, a maximum likelihood criterion may be used to establish the optimization criterion.

To represent the entire acoustic space for the background model, models are typically composed of several hundred Gaussian components. If a Gaussian Mixture Model (GMM) has been chosen for the background model (BM), the likelihood parameter to be used is the weighted mean of the likelihood of the frame, given each component, where a component is represented by the corresponding mean vector and covariance matrix. Thus for a GMM-based background model, the likelihood may be defined according to Equation 1 below.

$$l(y|G) = \sum_{i=1}^{g} w_i . N(y, \mu_i, \Sigma_i) \qquad \text{Equation 1}$$

where y is the acoustic vector, $G$ the GMM, $g$ the number of components of $G$, $w_i$ the weight of the i component, $\mu_i$ the mean of the component, $\Sigma_i$ the (diagonal) covariance matrix of the component and $N()$ the normal probability density function.

For an HMM-based background model, the likelihood parameter is the likelihood of the input frame, given the corresponding state of the HMM, which is a GMM model in which the likelihood may be computed using Equation 1. However, in this case, Viterbi decoding is applied to determine the best sequence of states corresponding to the sequence of input frames.

After developing the background model 32, acoustic data 34 is obtained from the enrolling speaker.

The acoustic data 34 is used at 36 to adapt the background model and thereby construct the speaker model X as illustrated at 38. While a variety of different adaptation techniques may be used, a presently preferred one uses the Maximum A Posteriori (MAP) adaptation. In the preferred embodiments, only the Gaussian mean parameters of the mixture components are adapted.

In the preceding steps, a background model (BM) was constructed. This model inherently contains acoustic information about the environment in which the system will be used. Derived from this model, the speaker models (X) retain the environment information, and add to it information about each specific speaker who participated in enrollment. The final processing steps, which will be discussed next, add to the speaker models (X) temporal sequence information associated with each sentence corresponding to a given target event.

The final processing steps to encode temporal structure information into the GDW model are illustrated in Figure 2, beginning at step 40 and continuing in Figure 3. At step 40, a GDW TSI model is constructed from the corresponding speaker model 38 for each enrollment repetition. The TSI model consists of one model per frame, as illustrated at 42 in Figure 2. These models may be derived from the speaker (X) model by adapting the Gaussian weight components. Equation 2, below, illustrates how the weight components may be adapted using the MAP adaptation algorithm. MAP adaptation of the weights may be implemented using a direct interpolation strategy.

$$w_i^{X_n} = \alpha . w_i^X + (1-\alpha) . \hat{w}_i^{X_n}$$

$$\text{and } \hat{w}_i^{X_n} = \frac{w_i^X N(y, \mu_i, \Sigma_i)}{\sum_{j=1}^{g} w_j^X N(y, \mu_j, \Sigma_j)} \qquad \text{Equation 2}$$

where $w_i^{X_n}$ is the final (adapted) weight of the $i$ component of the n state/frame dependent model derived from X using y data subset, $w_i^{X_n}$ is the corresponding estimate weight computed on y subset, $w_i^X$ the weight of the $i$ component of the model $X$, used as prior information and $\alpha$, the adaptation factor.

After developing the initial set of GDW TSI models for a given target event (one TSI model for each enrollment repetition corresponding to the target event) a cross distance matrix is computed at 44. The matrix represents all the distances between each TSI model 42 and each enrollment repetition of acoustic data 34. After doing so, an average distance between each TSI model and the set of enrollment repetitions is computed and the TSI model with the minimal average distance is selected 48 as the best or "central model".

Once the central model has been developed, additional adaptation is performed to more tightly refine the model to all the enrollment speech linked to this target event. Thus model adaptation is performed at step 56. The adaptation may be conducted by aligning the central model 52 with the acoustic data 34 (Fig. 2) and then performing adaptation a single time, or iteratively multiple times, as illustrated. The result is an adapted central model 58 that may then be used as the TSI model for the corresponding target event, in the desired speech processing application.

COMPARISON OF GDW MODELING AND CONVENTIONAL MODELING

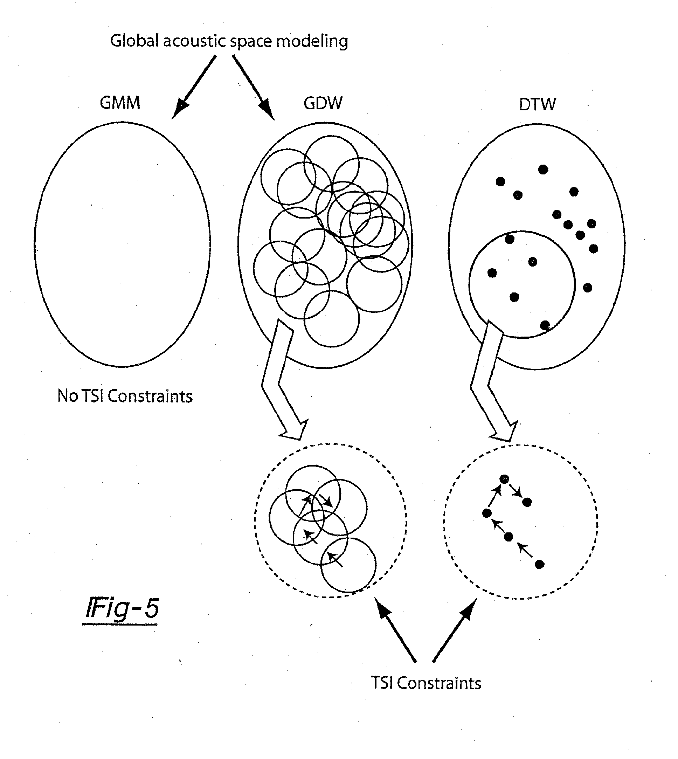

GDW technique involves a three layers hierarchical modeling shown in Figure 4. The upper layer is the background model (BM) level 32. The intermediate layer comprises the speaker (X) models 38 that are derived from the BM. The lower level layer comprises the temporal structure information (TSI) models which are composed by a set of frame dependent models 42 that are, in turn, derived from the corresponding X. The TSI models comprise both the phonetic content and the temporal structure information of a given sentence. An instance of the upper layer tied with an instance of the intermediate layer and an instance of the lower layer constitute a GDW target event model.

Figure 4 shows how the corresponding acoustic space is embodied within these three layers. As illustrated at 60, the acoustic space spanned by the background model (BM) contains the respective acoustic spaces 62 of the speakers. As illustrated at 64, each speaker model (such as speaker model 3) contains data 66 corresponding to the TSI model which is composed of a set of frame-dependent models and a temporal sequence between this models.

In presently preferred embodiments, each layer of GDW model consists of a set of Gaussian models. At the top layer (BM), the acoustic space model incorporates the acoustic variability via the Gaussian covariance parameters.

At the intermediate layer, the speaker specificity given by all the enrollment material related to a speaker is more specifically represented by the Gaussian mean parameters

The temporal speech structure information is intrinsically tied to the phonetic content of the spoken utterance and to the speaker. This temporal information is taken into account by the TSI models at the lower layer of GDW model. The information is represented mainly by the mixture weight parameters of the frame-dependent models.

While the GDW modeling system of the invention differs from conventional modeling techniques in many respects, it may be helpful here to reiterate some of these differences, now that the model training process has been explained. Figure 5 compares the GDW modeling system with conventional GMM and DTW modeling systems. As illustrated, the GMM modeling system captures no temporal sequence information (TSI) and thus embeds no TSI constraints. The DTW modeling system does capture temporal sequence information, however it embeds very little acoustic space modeling. The GDW system of the invention captures what neither of the other models can: it captures both acoustic space modeling information and TSI constraints.

FURTHER IMPLEMENTATIONAL DETAILS OF THE PRESENTLY PREFERRED EMBODIMENTS

TSI Processing

As previously discussed, the GDW modeling system takes temporal sequence information of speech events into account when the speaker model is used to construct the TSI model components, the frame-dependent models. In the presently preferred embodiment a dynamic time warping algorithm is used for this purpose. The DTW algorithm seeks to find for each temporal instant, the best alignment between the input signal (represented by a stream of acoustic vectors) and a model composed of a number of predefined frame-dependent Gaussian models. In this respect, the GDW system is quite different from an HMM model, where there is no predetermined correlation between states of the HMM model and frames of the input signal.

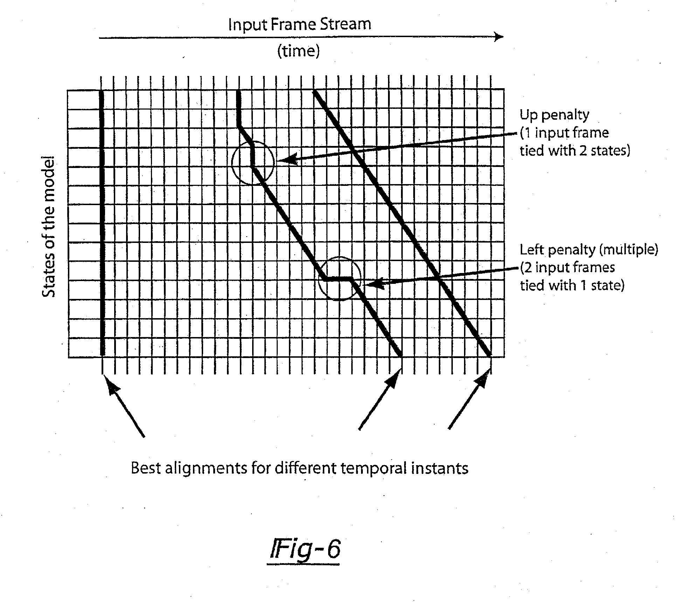

Figure 6 illustrates the presently preferred DTW decoding. In the GDW system, the DTW algorithm is controlled by three elements: a penalty function set, the local distance between an input frame and a TSI frame-dependent model, and a temporal constraint tuning parameter.

The penalty function set comprises two functions. The first function gives the value of the penalty when several input frames are associated with one frame-dependent model. The second function gives the value of the penalty when one input frame is associated with several frame-dependent models. Figure 6 shows an example of these two penalties.

Some of the presently preferred embodiments may also employ a tuning factor that controls the degree to which temporal constraints will impact the operation of the system. This is implemented by introducing a tuning factor. First, the value of the alpha parameter (of Equation 2) during adaptation of the frame-dependent models is used to relax the specificity of a frame-dependent model. If alpha is set to 1, the frame-dependent models are all equal (for a given target event), and the temporal constraints will have a low influence. If alpha is set to 0, the models are completely free, and the temperal constraints are strongly taken into account. A normalizing factor may be chosen in computing the local distance. This has the effect of balancing or tuning the degree to which temporal information will exert power over global aspects of the target event.

Computation of the frame likelihood

Local distance for matching

The DTW decoding requires the computation of a distance (that is, a similarity measure) between each input frame and each frame-dependent model. This distance is derived from a likelihood ratio, which measures the specificity of the frame. The numerator of the ratio is the likelihood of the frame given the frame-dependent model and the denominator is close to the likelihood of the frame given the event global model X. In order to take into account the information of interest within the frame, the denominator is estimated using a combination of X and BM, the background model. More precisely, the matching local distance is given by:

$$LocalDist(y, X_n) = NormDist\left(\log\left(\frac{l(y|X_n)}{beta.l(y|X) + (1-beta).l(y|BM)}\right)\right) \qquad \text{Equation 3}$$

where $y$ is the input frame, $X_n$ is the frame-dependent model, $X$ the global event model, $BM$ the background model and $beta$ a combination factor.

$NormDist()$ is a normalization function used to transform a likelihood ratio into a distance like score:

$$NormDist(a) = 0 \text{ if } a > Max, 1 \text{ if } a < Min, \frac{(Max-a)}{(Max-Min)} \text{else} \qquad \text{Equation 4}$$

where $Max$ and $Min$ are the boundary of the input.

In the above two formula, LocalDist() measures whether the frame model is closer to an input frame as compared with the global target model. As this measure is relative, it is weighted using the BM model, which says if the input frame is relevant or not. The function is normalized to output in the [0,1] space.

Matching score

The resulting matching score is a combination of local distances and DTW penalties, weighted by the number of local distances in the selected path.

Memory size and computational cost reduction due to the frame-dependent models structure

Being, in part, a statistically-based modeling system, the GDW models will often require storage and computation of a large number of Gaussian components. Thus computer resource considerations may need to be taken into account, depending on the application Moreover, the GDW's lower layer model (TSI frame-dependent models) are viewed as complete Gaussian models but are physically represented as modifications of the intermediate layer models (X), which are also represented as modifications of upper layer model (BM). This structure allows to save memory space and computation resource, as only the modified elements have to be stored and recomputed. In a presently preferred embodiments, for a given frame-dependent model, only few Gaussian component weights, taken in a "adaptation window", are stored and only the corresponding values are recomputed for the given frame-dependent model.

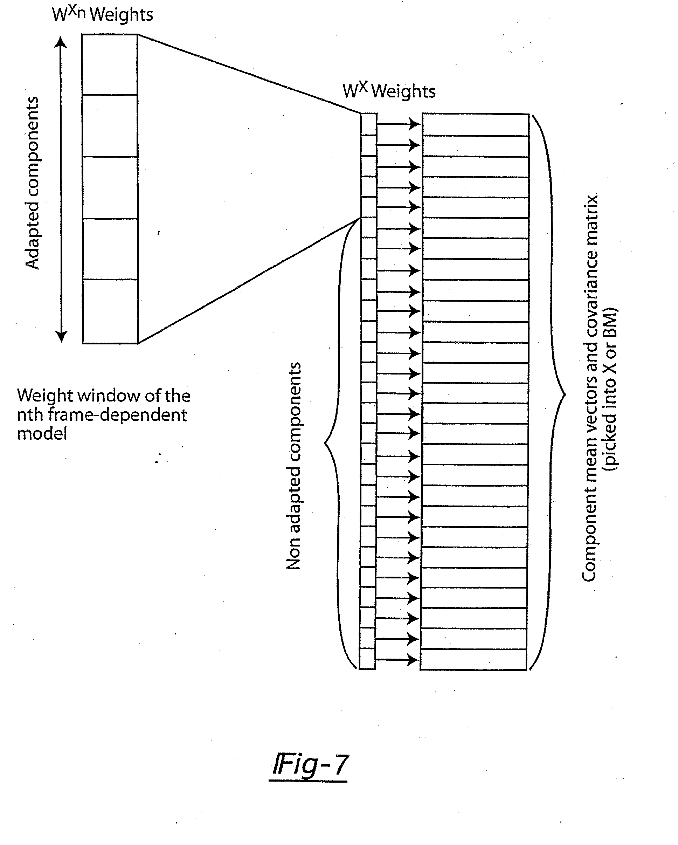

Illustrated in Figure 7, the windowing system selects only a subset of all available Gaussian components and only the weights of the selected components are stored. All other components are picked in the upper models or directly estimated from the upper models.

The likelihood of y (a test frame) given Xn, (the nth frame-dependent model for the event X) is estimated by the sum of two quantities: SumAdapted() and SumNonAdapted(). SumAdapted() represents the participation of the components selected for this frame-dependent model (in the window); whereas SumNonAdapted() represents the participation of the other components. This is further illustrated in Equation 5.

$$l(y|X_n) = SumAdapted(y, X_n) + SumNonAdapted(y, X_n, X) \qquad \text{Equation 5}$$

where $SumAdapted()$ represents the participation of the components selected in the frame-dependent model and $SumNonAdapted()$, the participation of the other components, picked into X (corresponding speaker model).

The Equations 6 and 7 below show how SumAdapted() and SumNonAdapted() may be computed:

$$SumAdapted(y, X_n) = \sum_i^m W_i^{X_n} \cdot l\left(y\middle|g_i^X\right)$$

Equation 6

Where $W^{X_n}$ is the weight of the $i$ component selected in the frame model $X_n$, $l(y|g^X_i)$ is the likelihood of $y$ given the $i$ (gaussian) component of $X$ and $m$ the size of the weight window.

$$SumNonAdapted(y, X_n, X) = \left(l(y|X) - \sum_i^m W_i^X \, l\left(y\middle|g_i^X\right)\right) * NormWeight(X, X_n)$$

Equation 7

$$NormWeight(X, X_n) = \frac{1 - \sum_i^m W_i^{X_n}}{1 - \sum_i^m W_i^X}$$

Where $W^{X_n}$ is the weight of the i component selected in the frame-dependent model $X_n$, $W_i^X$ is the weight of the corresponding component in $X$, $l(y|g_i^X)$ is the likelihood of $y$ given the $i$ (gaussian) component of $X$, $m$ the size of the weight window and $l(y|X)$ the likelihhod of y given $X$ (the corresponding speaker model).

In Equation 7, note that *SumNonAdapted()* is the likelihood of the input frame given the non adapted part of the frame-dependent model (which is picked into the corresponding $X$ model), normalized in such a way that the sum of component weights in $X_n$ model adds up to 1.

SOME USES OF THE GDW MODEL

Speaker Recognition

Speaker recognition is one speech processing application that can benefit from the GDW technique. In such an application, the BM model may correspond to a comparatively large GMM (for example 2048 components). The target events may comprise the speaker identity and password (together).

A frame-based score is computed for each couple(frame-dependent model, input frame) given by the alignment process (the temporal structure information subsystem). The score function, BioScore(),is given by Equation 8:

$$BioScore(y, X_n) = \log\left(\frac{\left(local \, l(y|X_n)\right) + (1 - local) \, l(y|X)}{l(y|BM)}\right)$$

Equation 8

where $y$ is the input frame, $X$ the speaker model, $X_n$ the frame-dependent model, *BM* the background model and *local,* a weight between 0 and 1, named LocalBioWeight.

The BioScore() represents a similarity measure between an input frame and the corresponding frame-dependent model. It is normalized by the BM model, in order to reject non-informative frames (non speech frames for example). The weight of the frame dependent target model (compared to the global target model) is given by the *local* parameter. Usually, the *local* parameter is set to 1, giving all the control to frame dependent models. The final score is an arithmetic mean of the *BioScore()* weighted by the energy of the corresponding frame.

Word recognition applications

Word recognition applications (with a potential spotting mode) are other applications that can greatly benefit from the GDW system. The main advantage, compared to classical DTW or HMM approaches, is the adaptation potential given by the adaptation of the global GMM to a new speaker or new environmental conditions. If desired, the adaptation may be done in a word-independent mode, moving only the components of the general models (X and UBM in this document).

The description of the invention is merely exemplary in nature and, thus, variations that do not depart from the gist of the invention are intended to be within the scope of the invention. Such variations are not to be regarded as a departure from the spirit and scope of the invention.

## Claims

1. A method for constructing a speech model, comprising:

    constructing an acoustic space model from a plurality of utterances obtained from a plurality of speakers;
    constructing a speaker model by adapting the acoustic space model using enrollment speech from at least one speaker;
    identifying a temporal structure associated with said enrollment speech; and
    constructing a speech model based on said speaker model and on the enrollment speech while preserving the temperal structure of said enrollment speech in said speech model.

2. The method of claim 1 wherein the temporal structure of said enrollment speech is preserved in said speech model by constructing a set of frame dependent models that are mapped to a set of frames.

3. The method of claim 2 wherein said set of frames has an associated timing reference that is established from and directly preserves the timing of said enrollment speech.

4. The method of claim 1 wherein said acoustic space model, said speaker model and said temporal structure share a common hierarchical relationship.

5. The method of claim 1 wherein said acoustic space model is constructed by statistical modeling.

6. The method of claim 1 wherein said acoustic space model is constructed by obtaining speech from a plurality of speakers, extracting features from said obtained speech and representing said extracted features as Gaussian parameters.

7. The method of claim 1 wherein said acoustic space model is represented using a Hidden Markov Model.

8. The method of claim 1 wherein said acoustic space model is represented using a Gaussian Mixture Model.

9. The method of claim 1 wherein said speaker model is constructed by statistical modeling and wherein the step of adapting the acoustic space model is performed by maximum a posteriori adaptation.

10. The method of claim 1 wherein said temporal structure information model is constructed by statistical modeling using said speaker model and said acoustic space model for a plurality of enrollment speech utterances.

11. The method of claim 10 wherein said temporal structure information model is further built by constructing a temporal structure information model for each of a plurality of enrollment speech utterances and then by selecting the best temporal structure information model.

12. The method of claim 10 further comprising adapting said temporal structure information models based on said enrollment speech utterances.

13. A method for constructing a speech model, comprising:

    constructing an acoustic space model from a plurality of utterances obtained from a plurality of speakers;
    constructing a speaker model by adapting the acoustic space model using enrollment speech from at least one speaker;
    constructing a temporal structure information model by representing said speaker model as a plurality of frame dependent models that correspond to sequential time intervals associated with said enrollment speech; and
    constructing said speech model by adapting the temporal structure information model using said enrollment speech, said speaker model and said acoustic space model.

**14.** The method of claim 13 further comprising representing said acoustic space model as a plurality of Gaussian parameters.

**15.** The method of claim 13 further comprising representing said acoustic space model as a plurality of parameters that include Gaussian mean parameters and wherein said step of adapting the acoustic space model is performed by adapting said Gaussian mean parameters.

**16.** The method of claim 13 further comprising representing said acoustic space model as a plurality of parameters that include Gaussian weight parameters and wherein said step of adapting the temporal model is performed by adapting said Gaussian weight parameters.

**17.** The method of claim 13 wherein said temporal model is further constructed by obtaining plural instances of enrollment speech from at least one single speaker and constructing a frame-based temporal structure information model

**18.** A hierarchical speech model comprising:

a first layer for representing an acoustic space;
a second layer for representing a speaker space;
a third layer for representing temporal structure of enrollment speech according to a predetermined frame structure.

**19.** The speech model of claim 18 wherein said first layer is a set of Gaussian model parameters.

**20.** The speech model of claim 18 wherein said second layer is a set of Gaussian model mean parameters.

**21.** The speech model of claim 18 wherein said third layer is a set of Gaussian model weight parameters.

**22.** The speech model of claim 18 wherein said second layer is hierarchically related to said first layer.

**23.** The speech model of claim 18 wherein said third layer is hierarchically related to said second layer.

**24.** The speech model of claim 23 wherein said third layer is related to said second layer based on an adaptation factor for tuning the degree of influence between said third layer and said second layer.

**25.** A speech processing system comprising:

a speech recognizer having a set of probabilistic models against which an input speech utterance is tested; said set of probabilistic models being configured to contain:

a first layer for representing an acoustic space;
a second layer for representing a speaker space;
a third layer for representing temporal structure of speech according to a predetermined frame structure.

**26.** The speech processing system of claim 25 wherein said set of probabilistic models stores an enrollment utterance and said speech recognizer performs a word spotting function.

**27.** The speech processing system of claim 25 wherein said set of probabilistic models stores an enrollment utterance and said speech recognizer performs a speaker recognition function.

**28.** The speech model of claim 25 wherein said first layer is a set of Gaussian model parameters.

**29.** The speech model of claim 25 wherein said second layer is a set of Gaussian mean parameters.

**30.** The speech model of claim 25 wherein said third layer is a set of Gaussian weight parameters.

**31.** The speech model of claim 25 wherein said second layer is hierarchically related to said first layer.

**32.** The speech model of claim 25 wherein said third layer is hierarchically related to said second layer.

**33.** The speech model of claim 32 wherein said third layer is related to said second layer based on an adaptation factor for tuning the degree of influence between said third layer and said second layer.

Acoustic Data

A priori Knowledge
(acoustic space) ~10

12 ~ A priori Knowledge
(temporal constraints)

Statistical
Acoustic Space
Modeling ~14

18 ~ TSI Subsystem
(DTW)

16

20 ~

GDW (core)

GDW Model

22 ~

A target
event model

Background
Model (BM)

32

Speaker
Model (x)

38

TSI Model

$X_1 X_2 X_3$  $X_Y$  $X_L$

42

frame-dependent
model $X_N$

_Fig-1_

Multiple Speaker Acoustic Data

*30*

Construct Background Model [BM]

BM

*32*

Adapt Background Model to a Particular Enrollement - Thereby Constructing Speaker Model [X]

*36*

*34*

1

2

n

X

*38*

Construct GDW TSI Model for Each Enrollment Repetition - One Frame-Dependent Model for Each Input Frame Present in the Repetition

*40*

Repetition 1

• • •

*42*

**IFig-2**

Repetition 2

• • •

*44*

Cross Distance Metric Operation

Repetition 3

• • •

to Fig. 3

from Fig. 2

Select Central Model
Having Lowest Cross
Distance Average — 42

Central
Model

Adapt Model Using
All Repetitions

Iterate if
desired

Adapted
Central
Model — 58

_Fig-3_

_Fig-4_

Global acoustic space modeling

GMM            GDW            DTW

No TSI Constraints

Fig-5

TSI Constraints

Input Frame Stream

(time)

States of the model

Up penalty
(1 input frame
tied with 2 states)

Left penalty (multiple)
(2 input frames
tied with 1 state)

Best alignments for different temporal instants

*Fig-6*

$W^{X}n$ Weights

Adapted components

$W^{X}$ Weights

Weight window of the
nth frame-dependent
model

Non adapted components

Component mean vectors and covariance matrix.
(picked into X or BM)

_Fig-7_